# FASCICULE DE BREVET EUROPEEN

(11) **EP 1 729 392 B1**
(45) Date de publication et mention de la délivrance du brevet: **22.04.2015**
(21) Numéro de dépôt: 06290871.0
(22) Date de dépôt: 30.05.2006
(51) Int. Cl.: H02J 1/08, B60R 16/02

(54) **Installation électrique de bord de véhicule automobile**
Elektrisches Kraftfahrzeug-Bordnetz
Electric system onboard a motor vehicle

(30) Priorité: 02.06.2005 FR 0505598; 02.06.2005 FR 0505602
(43) Date de publication de la demande: 06.12.2006
(73) Titulaire: PEUGEOT CITROËN AUTOMOBILES S.A., 78140 Vélizy Villacoublay (FR)
(72) Inventeur: Leduc, Edouard-Pierre, 78960 Voisins-le-Bretonneux (FR); Dupuy, Laurent, 92100 Boulogne (FR)
(74) Mandataire: Ménès, Catherine

(56) Documents cités:
- DE-A1- 3 327 532
- US-A- 5 576 686
- PATENT ABSTRACTS OF JAPAN vol. 009, no. 103 (M-377), 8 mai 1985 (1985-05-08) & JP 59 227537 A (MAZDA KK), 20 décembre 1984 (1984-12-20)

## Description

La présente invention concerne une installation électrique de bord de véhicule automobile.

Plus particulièrement, l'invention se rapporte à une telle installation qui comporte des moyens de stockage d'énergie électrique, constitués par exemple par une ou plusieurs batteries de stockage, un alternateur, un démarreur, des organes fonctionnels à alimentation permanente, des organes fonctionnels à alimentation de puissance et des calculateurs.

Actuellement, les installations électriques de ce type comportent deux lignes d'alimentation à partir de la batterie, l'une en direction du démarreur puis de l'alternateur, et l'autre en direction de tous les autres consommateurs du véhicule.

Le document JP 59227537 montre une installation électrique suivant le préambule de la revendication 1.

Or, dans le contexte actuel des systèmes électriques embarqués à bord des véhicules, on constate un besoin toujours accru de fonctions et de prestations électriques dans le véhicule et il se pose alors un problème d'alimentation en énergie électrique de ceux-ci.

Compte tenu du niveau de puissance mis en jeu, de la saturation des relais ou contacteurs existants et des prestations fonctionnelles demandées, les véhicules comportent de plus en plus de consommateurs alimentés en continu par une ligne d'alimentation permanente également appelée « + BAT Permanent », ce qui présente deux inconvénients majeurs lorsque le véhicule est mis en veille.

En effet, ces architectures augmentent les risques liés aux dangers électriques et se traduisent par une dégradation des performances de la batterie en raison des courants de fuite des consommateurs.

Pour tenter de résoudre ces problèmes, on a proposé d'ajouter un relais ou contacteur entre la batterie et les consommateurs à risque.

Mais, cette solution présente un certain nombre d'inconvénients car le coût et l'encombrement du relais ou contacteur devient prohibitif pour des consommateurs de forte puissance, l'ouverture intempestive du relais conduit à la perte du consommateur, ce qui se traduit également par un problème de fiabilité de fonctionnement et pour chaque relais, il faut ajouter une alimentation et une commande spécifique de la bobine.

Le but de l'invention est donc de résoudre ces problèmes.

A cet effet, l'invention a pour objet un installation électrique de bord pour véhicule automobile, du type comportant des moyens de stockage d'énergie électrique, un alternateur, un démarreur, des organes fonctionnels à alimentation permanente, des organes fonctionnels à alimentation de puissance et des calculateurs, caractérisée en ce qu'elle comporte trois lignes d'alimentation dont une première ligne d'alimentation permanente associée aux organes à alimentation permanente et raccordée directement aux moyens de stockage d'énergie électrique, une deuxième ligne d'alimentation de puissance associée au démarreur, à l'alternateur et aux organes à alimentation de puissance et raccordée aux moyens de stockage d'énergie électrique à travers un contacteur à fermeture à la mise du contact du véhicule et une troisième ligne d'alimentation commutée en stockage du véhicule associée aux calculateurs et raccordée aux moyens de stockage d'énergie électrique à travers des moyens de commutation de leur alimentation.

Suivant d'autres caractéristiques :
- les moyens de commutation comprennent un contacteur piloté à l'ouverture lors d'un stockage du véhicule ;
- les moyens de commutation comprennent des moyens de raccordement de la troisième ligne en aval du contacteur à fermeture de la deuxième ligne d'alimentation de puissance, lors d'un stockage du véhicule ;
- les moyens de raccordement comprennent un commutateur ;
- le commutateur est à commande électrique ;
- le commutateur est à commande manuelle ;
- les moyens de raccordement comprennent des moyens formant shunt déplaçables manuellement entre une position de raccordement de la troisième ligne en aval du contacteur à fermeture de la deuxième ligne et une position de raccordement de la troisième ligne directement aux moyens de stockage ;
- les moyens de commutation comprennent un contacteur à ouverture dont le fonctionnement est piloté par des moyens de surveillance du courant circulant dans cette ligne ;
- les moyens de stockage d'énergie électrique comportent deux batteries à partir d'au moins l'une desquelles s'étend une première ligne d'alimentation permanente, la deuxième ligne d'alimentation de puissance s'étend à partir de l'une de ces batteries et la troisième ligne d'alimentation surveillée s'étend à partir de l'autre de ces batteries ; et
- des organes fonctionnels embarqués à bord du véhicule comportent une portion de surveillance de fonctions raccordée à la troisième ligne d'alimentation surveillée et une portion de puissance raccordée à la deuxième ligne d'alimentation de puissance.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure générale d'un premier exemple de réalisation d'une installation électrique de bord selon l'invention ; et
- les Fig.2, 3 et 4 illustrent différentes variantes de réalisation d'une telle installation ;
- la Fig.5 représente un schéma synoptique illustrant la structure générale d'un deuxième exemple de réalisation d'une installation électrique de bord selon l'invention ; et
- les Fig.6, 7 et 8 illustrent différentes variantes de réalisation d'une telle installation.

L'invention a pour but de proposer une solution capable de se prémunir des dangers électriques lorsque par exemple le véhicule est en veille ou en stockage. De plus, elle doit permettre une réduction des coûts, une amélioration de la fiabilité/sécurité et une diminution des consommations en veille ou en stockage sur la batterie.

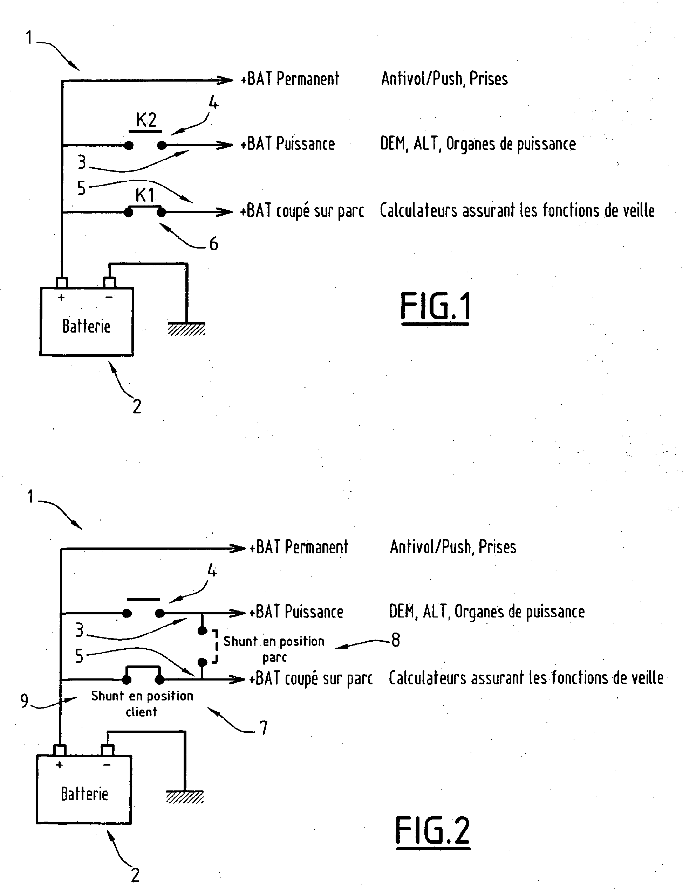

A cet effet, et comme cela est illustré sur la figure 1, l'installation électrique de bord telle que décrite précédemment, comporte trois lignes d'alimentation dont une première ligne d'alimentation permanente « + BAT Permanent », désignée par la référence générale 1, raccordée directement aux moyens de stockage d'énergie électrique désignés par la référence générale 2 et constitués par exemple par une batterie de stockage d'énergie électrique.

Cette première ligne d'alimentation permanente 1 est associée par exemple aux organes à alimentation permanente du véhicule, tels que des prises embarquées, un système antivol, etc..

L'installation électrique selon l'invention comporte également une deuxième ligne d'alimentation de puissance désignée par la référence générale 3 sur cette figure et appelée « + BAT Puissance ».

Cette deuxième ligne d'alimentation de puissance est associée par exemple au démarreur et à l'alternateur du véhicule et aux organes à alimentation de puissance et est raccordée aux moyens de stockage d'énergie électrique 2, à travers un contacteur à fermeture à la mise du contact du véhicule, ce contacteur à fermeture étant désigné par la référence générale 4 sur cette figure et étant appelé K2.

Enfin, cette installation comporte une troisième ligne d'alimentation commutée en stockage du véhicule appelée « + BAT coupé sur parc », désignée par la référence générale 5 sur cette figure.

Cette troisième ligne d'alimentation est associée par exemple aux calculateurs embarqués et est raccordée aux moyens de stockage d'énergie électrique 2 à travers des moyens de commutation d'alimentation formés par exemple par un contacteur à ouverture désigné par la référence générale 6 sur cette figure et appelé K1, dont le fonctionnement est commandé à l'ouverture lorsque le véhicule est stocké en parc pour une longue durée par exemple.

Ceci permet alors de se prémunir des risques électriques lorsque le véhicule est en veille et/ou stocké.

Le concept de base est alors d'utiliser deux types de + BAT, à savoir :
- un + BAT Puissance commuté dans toutes les phases de veille et en cas d'accident par exemple par K2 et destiné à l'ensemble des consommateurs qui fonctionnellement n'ont pas besoin d'être alimentés en + BAT Permanent,
- un + BAT Coupé sur Parc lorsque le véhicule est stocké en parc pour une longue durée par exemple.

Ce + BAT coupé sur parc est plus particulièrement adapté à tous les calculateurs.

Pour des contraintes de conformité à des normes par exemple, le + BAT Permanent peut être conservé sur la prise de diagnostic du véhicule.

Enfin, le profil de K2 permet d'économiser bon nombre de relais.

L'alternateur est alors volontairement placé en aval de K2 sur le + BAT Puissance. Cet alternateur est alors au plus près des consommateurs de puissance et K2 ne voit pas de courant important, ce qui permet d'en réduire le coût.

En outre, K2 se trouve alors entre les deux sources de puissance du véhicule, à savoir la batterie et l'alternateur. L'ouverture intempestive de K2 lorsque le véhicule roule, ne conduit plus à la perte d'organes fonctionnels. Ceci permet d'augmenter la fiabilité et la sécurité de fonctionnement de l'installation.

Pour ce qui est des consommateurs en veille, l'installation selon l'invention est optimisée dans la mesure où seuls les consommateurs qui ont fonctionnellement besoin d'une alimentation permanente sont alimentés. Tous les autres sont commutés grâce à K2.

De plus, et si besoin est, notamment pour des stockages de véhicules en parc pour une longue durée, par exemple supérieure à un mois, il peut également être possible de piloter K1, de façon électronique ou manuelle, et ainsi de commuter volontairement et exceptionnellement, le + BAT coupé sur parc. Le réamorçage du réseau électrique se fait alors à travers par exemple le système d'antivol du véhicule ou un bouton de démarrage quelconque, alimenté en + BAT Permanent.

La consommation en énergie, lors d'une phase de veille prolongée, est alors quasiment nulle.

Selon le type de moyens de commutation utilisés pour le + BAT Coupé sur Parc, il peut également ne plus être nécessaire d'intervenir physiquement sur le véhicule, pour déconnecter et reconnecter la batterie, par exemple sous le capot du compartiment moteur.

Une telle structure est extrêmement flexible et peut être déclinée pour plusieurs variantes de réalisation d'installation.

Sur la figure 1, on a illustré des moyens de commutation de la troisième ligne d'alimentation sous la forme d'un contacteur à ouverture K1.

Bien entendu, d'autres modes de réalisation peuvent être envisagés et ceux-ci peuvent également être constitués par un interrupteur à pilotage manuel.

D'autres modes de réalisation encore peuvent être envisagés, comme cela est illustré sur la figure 2.

Sur cette figure 2, les moyens de commutation sont désignés par la référence générale 7 et se présentent par exemple sous la forme de moyens de raccordement de la troisième ligne d'alimentation 5 en aval du contacteur à fermeture K2 de la deuxième ligne d'alimentation de puissance lors d'un stockage du véhicule.

Ces moyens peuvent par exemple être formés par un commutateur de basculement de l'alimentation ou encore par des moyens formant shunt déplaçables comme cela est illustré entre une position parc désignée par la référence générale 8 dans laquelle le + BAT Coupé sur Parc est relié en aval de K2 et une position client désignée par la référence générale 9, dans laquelle le + BAT Coupé sur Parc est raccordé aux moyens de stockage d'énergie 2.

Bien entendu, différentes implantations possibles peuvent être envisagées selon le volume disponible par exemple autour de la batterie du véhicule.

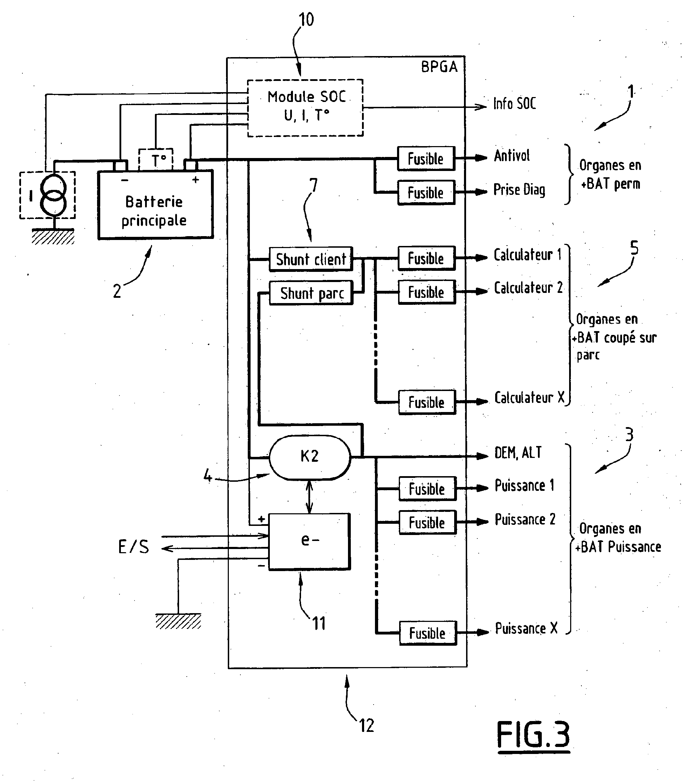

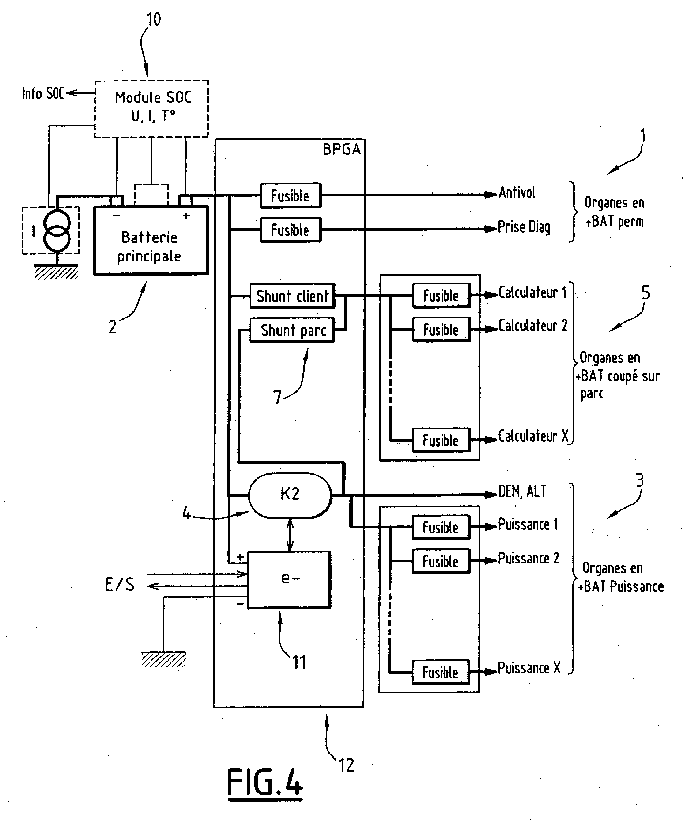

Deux variantes de réalisation possibles sont illustrées sur les figures 3 et 4.

Sur ces figures, on reconnaît la batterie 2 du véhicule, la première ligne 1, la deuxième ligne 3 avec le contacteur K2, 4, et la troisième ligne 5 avec les moyens formant shunt 7.

Un module d'estimateur d'état de charge de la batterie désigné par la référence générale 10 sur cette figure, est également prévu, ce module étant raccordé à des moyens d'acquisition de la tension aux bornes de la batterie, du courant circulant dans celle-ci et de sa température.

Des moyens de pilotage de K2 désignés par la référence générale 11 sont également prévus.

Les différents fusibles associés aux différents organes à alimenter sont également illustrés et intégrés dans un boîtier commun désigné par la référence générale 12.

Sur la figure 4, on a illustré une structure similaire en utilisant des numéros de référence identiques qui désignent des circuits identiques ou analogues.

Cependant, alors que sur la figure 3 tous les éléments ont été intégrés dans le boîtier 12, sur la figure 4, le volume disponible autour de la batterie n'est pas suffisant pour tout intégrer dans un même et seul boîtier, de sorte que les différents éléments décrits précédemment, à savoir par exemple le module d'estimation d'état de charge et les fusibles, sont disposés dans des boîtiers distincts.

Bien entendu, d'autres modes de réalisation encore peuvent être envisagés.

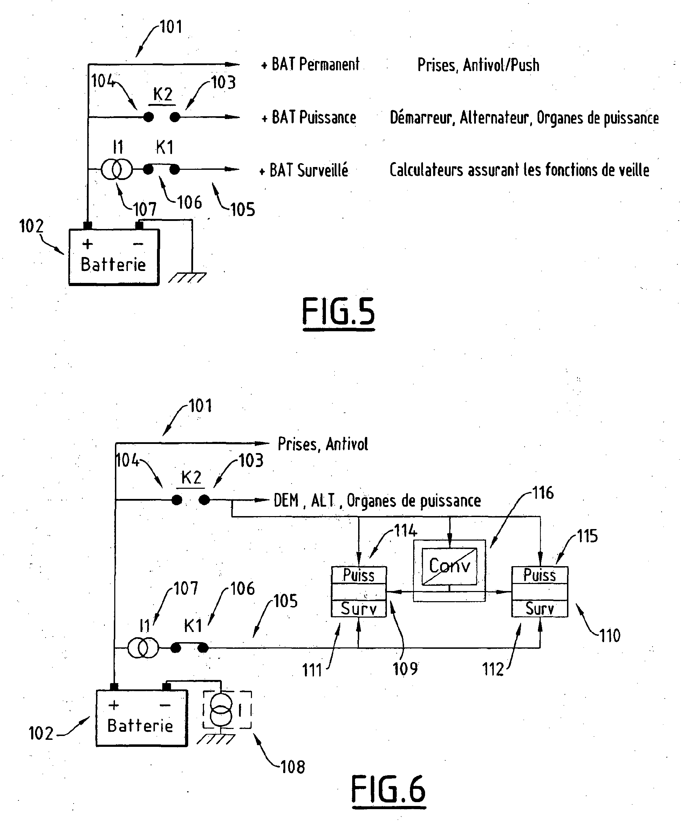

Ainsi, selon l'exemple de réalisation représenté sur la figure 5, l'installation électrique de bord comporte trois lignes d'alimentation dont une première ligne d'alimentation permanente « + BAT Permanent », désignée par la référence générale 101, raccordée directement aux moyens de stockage d'énergie électrique désignés par la référence générale 102 et constitués par exemple par une batterie de stockage d'énergie électrique.

Cette première ligne d'alimentation permanente 101 est associée par exemple aux organes à alimentation permanente du véhicule, tels que des prises embarquées, un système antivol, etc..

L'installation électrique selon l'invention comporte également une deuxième ligne d'alimentation de puissance désignée par la référence générale 103 sur cette figure et appelée « + BAT Puissance ».

Cette deuxième ligne d'alimentation de puissance est associée par exemple au démarreur et à l'alternateur du véhicule et aux organes à alimentation de puissance et est raccordée aux moyens de stockage d'énergie électrique 102, à travers un contacteur à fermeture à la mise du contact du véhicule, ce contacteur à fermeture étant désigné par la référence générale 104 sur cette figure et étant appelé K2.

Enfin, cette installation comporte une troisième ligne d'alimentation surveillée appelée « + BAT Surveillé », désignée par la référence générale 5 sur cette figure.

Cette troisième ligne d'alimentation surveillée est associée par exemple aux calculateurs embarqués et est raccordée aux moyens de stockage d'énergie électrique 102 à travers un contacteur à ouverture désigné par la référence générale 106 sur cette figure et appelé K1, dont le fonctionnement est piloté par des moyens de surveillance du courant circulant dans cette ligne, ces moyens étant désignés par la référence générale 107 sur cette figure.

Ceci permet alors de se prémunir des risques électriques lorsque le véhicule est en veille.

Le concept de base est alors d'utiliser deux types de + BAT, à savoir :
- un + BAT Puissance commuté dans toutes les phases de veille et en cas d'accident par exemple par K2 et destiné à l'ensemble des consommateurs qui fonctionnellement n'ont pas besoin d'être alimentés en + BAT Permanent,
- un + BAT Surveillé sur lequel grâce aux moyens de surveillance 107 du courant circulant dans cette ligne, on surveille le niveau de consommation lors des phases de veille du véhicule. En cas de consommation anormalement élevée, on déclenche l'ouverture de K1 et on met le véhicule en sécurité.

Cette alimentation est destinée à l'ensemble des consommateurs qui ont fonctionnellement besoin d'être alimentés par un + BAT Permanent.

Le + BAT Puissance est alors particulièrement adapté à l'alimentation de tous les organes de puissance, tandis que le + BAT Surveillé est particulièrement adapté à tous les calculateurs.

Pour des contraintes de conformité à des normes par exemple, le + BAT Permanent peut être conservé sur la prise de diagnostic du véhicule.

Enfin, le profil de K2 permet d'économiser bon nombre de relais.

L'alternateur est alors volontairement placé en aval de K2 sur le + BAT Puissance. Cet alternateur est alors au plus près des consommateurs de puissance et K2 ne voit pas de courant important, ce qui permet d'en réduire le coût.

En outre, K2 se retrouve alors entre les deux sources de puissance du véhicule, à savoir la batterie et l'alternateur. L'ouverture intempestive de K2 lorsque le véhicule roule, ne conduit plus à la perte d'organes fonctionnels. Ceci permet d'augmenter la fiabilité et la sécurité de fonctionnement de l'installation.

Pour ce qui est des consommateurs en veille, l'installation selon l'invention est optimisée dans la mesure où seuls les consommateurs qui ont fonctionnellement besoin d'une alimentation permanente sont alimentés. Tous les autres sont commutés grâce à K2.

De plus, et si besoin est, notamment pour des stockages de véhicules en parc pour une longue durée, par exemple supérieure à 1 mois, il peut également être possible de piloter K1, de façon électronique, et ainsi de commuter volontairement et exceptionnellement le + BAT Surveillé. Le réamorçage du réseau électrique se fait alors à travers par exemple le système d'antivol du véhicule ou un bouton de démarrage quelconque alimenté en + BAT Permanent.

La consommation en énergie, lors d'une phase de veille prolongée, est alors quasiment nulle. De plus, il n'est plus nécessaire d'intervenir physiquement sur le véhicule pour déconnecter et reconnecter la batterie, par exemple sous le capot du compartiment moteur.

Une telle structure est extrêmement flexible et peut être déclinée pour plusieurs variantes de réalisation d'installation.

Elle peut également être adaptée à différents besoins tels que par exemple un besoin d'un estimateur de charge de batterie à travers un capteur correspondant sur l'un des câbles (+ ou -) de la batterie, un besoin de tension filtrée par exemple pour l'éclairage du véhicule qui est particulièrement sensible aux variations de tension sur le réseau électrique, à travers un convertisseur optionnel, etc...

Enfin, une telle installation est particulièrement adaptée à une architecture appelée à double batteries dans laquelle une batterie de démarrage est dimensionnée pour les besoins de puissance et une batterie de servitude est dimensionnée pour les autres besoins en énergie.

On a illustré sur la figure 6, l'application d'une telle installation à une seule batterie avec un estimateur d'état de charge et différents organes fonctionnels tels que des boîtiers de distribution ou de servitude et un convertisseur de filtrage de tension.

Sur cette figure 6, des numéros de référence identiques désignent des éléments identiques à ceux de la figure 5.

Dans l'exemple illustré sur cette figure 6, la batterie 102 est également associée à des moyens de surveillance de celle-ci, désignés par la référence générale 108.

En fait, sur cette figure 6, les organes fonctionnels tels que les organes désignés par les références générales 109 et 110 comportent une portion de surveillance des fonctions telle que les portions 111 et 112 respectivement, raccordées à la troisième ligne d'alimentation surveillée 105 et une portion de puissance telle que les portions 114 et 115 respectivement, raccordées à la deuxième ligne d'alimentation de puissance 103.

De même, ces boîtiers peuvent être alimentés à travers un convertisseur de tension désigné par la référence générale 116, raccordé également à la deuxième ligne d'alimentation de puissance 103.

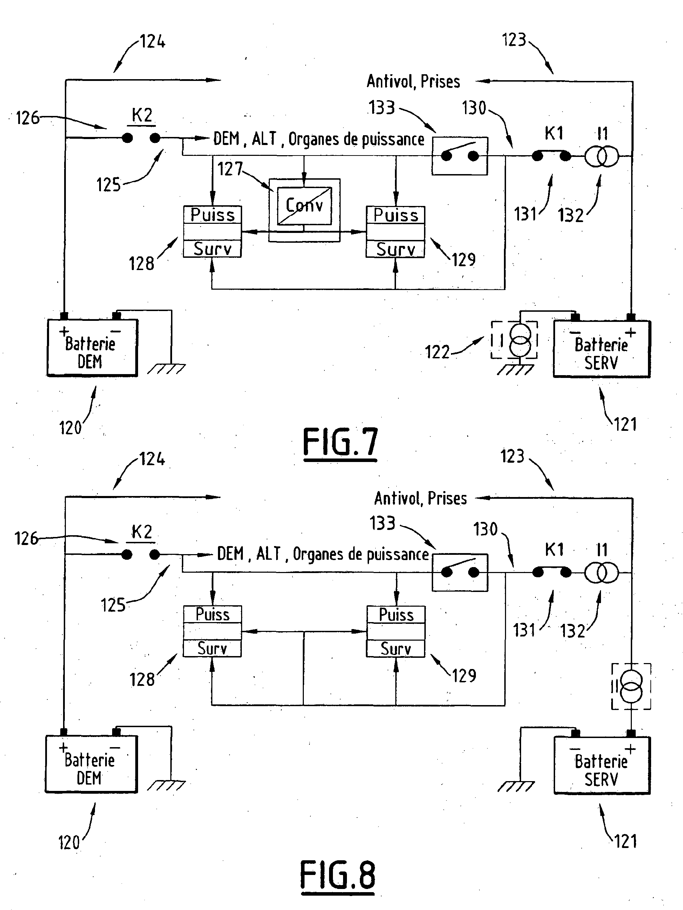

Sur la figure 7, on a illustré une variante de réalisation dans laquelle les moyens de stockage d'énergie électrique comportent deux batteries, l'une appelée « batterie de démarrage » et désignée par la référence générale 120 sur cette figure, et l'autre appelée « batterie de servitude » et désignée par la référence générale 121.

La batterie 121 est par exemple associée à des moyens de surveillance de celle-ci désignés par la référence générale 122.

Une première ligne d'alimentation permanente s'étend à partir de l'une ou de chacune de ces batteries, ces lignes d'alimentation permanente étant désignées par les références générales 123 et 124.

La ligne 123 issue de la batterie de servitude 121 est alors reliée par exemple au système antivol du véhicule, à des prises embarquées, etc.., tandis que l'autre ligne, désignée par la référence générale 124, issue de la batterie de démarrage 120 est alors reliée à d'autres organes du véhicule.

Une deuxième ligne d'alimentation de puissance désignée par la référence générale 125 associée à un contacteur à fermeture 126, est également associée à cette batterie de démarrage 120 et à la portion de puissance d'organes tels qu'un convertisseur 127 et de boîtiers de servitude 128 et 129, raccordés selon un schéma analogue à celui illustré sur la figure 6.

Cette deuxième ligne d'alimentation de puissance est également reliée au démarreur, à l'alternateur et aux organes de puissance embarqués.

Enfin, une troisième ligne d'alimentation surveillée s'étend à partir de la batterie de servitude 121.

Cette troisième ligne est désignée par la référence générale 130 sur cette figure et comporte un contacteur à ouverture 131 et des moyens de surveillance du courant circulant dans celle-ci désignés par la référence générale 132 permettant de piloter le contacteur K1 en cas de détection d'un problème.

Cette troisième ligne d'alimentation surveillée est raccordée aux portions de surveillance des boîtiers 128 et 129, de façon analogue à ce qui a été décrit en regard de la figure 6.

Des moyens de couplage désignés par la référence générale 133 peuvent être utilisés pour isoler les réseaux en veille et transférer de l'énergie depuis l'alternateur vers la batterie 121 lors des phases de roulage afin d'assurer sa recharge.

La figure 8 représente une variante de réalisation relativement proche de celle illustrée sur la figure 3 à l'exception de l'utilisation du convertisseur 127 d'alimentation des boîtiers 128 et 129.

Sur cette figure 8, des numéros de références identiques désignent des éléments ou organes analogues à ceux illustrés sur la figure 7.

En fait, le schéma illustré sur cette figure 8 est le même qui celui illustré sur la figure 7 à l'exception du fait que les boîtiers 128 et 129 ne sont plus alimentés à travers un convertisseur 127, mais directement à partir de la troisième ligne d'alimentation surveillée 130.

Bien entendu, différents modes de réalisation encore peuvent être envisagés et par exemple des batteries de technologies et/ou de tensions différentes peuvent être utilisées.

## Revendications

1. Installation électrique de bord pour véhicule automobile, du type comportant des moyens de stockage d'énergie électrique (2 ; 102 ; 120, 121), un alternateur, un démarreur, des organes fonctionnels à alimentation permanente, des organes fonctionnels à alimentation de puissance et des calculateurs, comportant une première ligne d'alimentation permanente (1 ; 101 ; 123, 124) associée aux organes à alimentation permanente et raccordée directement aux moyens de stockage d'énergie électrique (2 ; 102 ; 120, 121), une deuxième ligne d'alimentation de puissance (3 ; 103 ; 125) associée au démarreur, à l'alternateur et aux organes à alimentation de puissance et raccordée aux moyens de stockage d'énergie électrique (2 ; 102 ; 120, 121) à travers un contacteur à fermeture (K2) à la mise du contact du véhicule, **caractérisée en ce qu'**elle comporte une troisième ligne d'alimentation commutée en stockage du véhicule (5 ; 105 ; 130) associée aux calculateurs et raccordée aux moyens de stockage d'énergie électrique à travers des moyens de commutation (K1) de leur alimentation.

2. Installation électrique selon la revendication 1, **caractérisée en ce que** les moyens de commutation (K1) comprennent un contacteur piloté à l'ouverture lors d'un stockage du véhicule.

3. Installation électrique selon la revendication 1, **caractérisée en ce que** les moyens de commutation (7) comprennent des moyens de raccordement de la troisième ligne (5) en aval du contacteur à fermeture (K2) de la deuxième ligne d'alimentation de puissance, lors d'un stockage du véhicule.

4. Installation électrique selon la revendication 3, **caractérisée en ce que** les moyens de raccordement (7) comprennent un commutateur.

5. Installation électrique selon la revendication 4, **caractérisée en ce que** le commutateur est à commande électrique.

6. Installation électrique selon la revendication 4, **caractérisée en ce que** le commutateur est à commande manuelle.

7. Installation électrique selon la revendication 4, **caractérisée en ce que** les moyens de raccordement comprennent des moyens formant shunt déplaçables manuellement entre une position de raccordement de la troisième ligne (5) en aval du contacteur à fermeture (K2) de la deuxième ligne (3) et une position de raccordement de la troisième ligne (5) directement aux moyens de stockage (2).

8. Installation électrique selon l'une quelconque des revendications précédentes, **caractérisée en ce que** les moyens de commutation comprennent un contacteur à ouverture (K1) dont le fonctionnement est piloté par des moyens (107 ; 132) de surveillance du courant circulant dans cette ligne.

9. Installation électrique selon la revendication 8, **caractérisée en ce que** les moyens de stockage d'énergie électrique comportent deux batteries (120, 121) à partir d'au moins l'une desquelles s'étend une première ligne d'alimentation permanente (123, 124), **en ce que** la deuxième ligne d'alimentation de puissance (125) s'étend à partir de l'une de ces batteries (120) et **en ce que** la troisième ligne d'alimentation surveillée (130) s'étend à partir de l'autre de ces batteries (121).

10. Installation électrique selon la revendication 8 ou 9, **caractérisée en ce que** des organes fonctionnels (109, 110 ; 128, 129) embarqués à bord du véhicule comportent une portion (11, 12) de surveillance de fonctions raccordée à la troisième ligne d'alimentation surveillée (105) et une portion de puissance (114, 115) raccordée à la deuxième ligne d'alimentation de puissance (103).

## Patentansprüche

1. Elektrisches Bordnetz für Kraftfahrzeug des Typs, das elektrische Energiespeichermittel (2; 102; 120, 121), eine Lichtmaschine, einen Anlasser, Funktionsorgane zur ständigen Versorgung, Funktionsorgane zur Leistungsversorgung sowie Rechner umfasst, das eine erste Leitung zur ständigen Versorgung (1; 101; 123, 124) umfasst, die mit den Mitteln zur ständigen Versorgung assoziiert und direkt an die elektrischen Energiespeichermittel (2; 102; 120, 121) angeschlossen ist, eine zweite Leistungsversorgungsleitung (3; 103; 125), die mit dem Anlasser, der Lichtmaschine und den Leistungsversorgungsorganen assoziiert und an die elektrischen Energiespeichermittel (2; 102; 120, 121) über einen Schließkontakt (K2) beim Anlassen des Fahrzeugs angeschlossen ist, **dadurch gekennzeichnet, dass** es eine dritte Versorgungsleitung umfasst, die in Speicherung des Fahrzeugs (5; 105; 130) geschaltet ist, die mit den Rechnern assoziiert und an die elektrischen Energiespeichermittel über Umschaltmittel (K1) ihrer Versorgung angeschlossen ist.

2. Elektrisches Bordnetz nach Anspruch 1, **dadurch gekennzeichnet, dass** die Umschaltmittel (K1) einen Schalter umfassen, der bei einem Speichern des Fahrzeugs auf Öffnen gesteuert wird.

3. Elektrisches Bordnetz nach Anspruch 1, **dadurch gekennzeichnet, dass** die Umschaltmittel (7) Mittel zum Anschließen der dritten Leitung (5) stromabwärts des Schließkontakts (K2) der zweiten Leistungsversorgungsleitung bei einem Speichern des Fahrzeugs umfassen.

4. Elektrisches Bordnetz nach Anspruch 3, **dadurch gekennzeichnet, dass** die Anschlussmittel (7) einen Umschalter umfassen.

5. Elektrisches Bordnetz nach Anspruch 4, **dadurch gekennzeichnet, dass** der Umschalter elektrisch gesteuert ist.

6. Elektrisches Bordnetz nach Anspruch 4, **dadurch gekennzeichnet, dass** der Umschalter manuell gesteuert ist.

7. Elektrisches Bordnetz nach Anspruch 4, **dadurch gekennzeichnet, dass** die Anschlussmittel Mittel umfassen, die einen Shunt bilden, die manuell zwischen einer Anschlussposition der dritten Leitung (5) stromabwärts des Schließkontakts (K2) und einer zweiten Leitung (3) und einer Anschlussposition der dritten Leitung (5) direkt an die Speichermittel (2) manuell verlagerbar sind.

8. Elektrisches Bordnetz nach einem der vorhergehenden Ansprüche, **dadurch gekennzeichnet, dass** die Umschaltmittel einen Öffnungskontakt (K1) umfassen, dessen Funktionieren von Mitteln (107; 132) zum Überwachen des Stroms, der in dieser Leitung zirkuliert, gesteuert ist.

9. Elektrisches Bordnetz nach Anspruch 8, **dadurch gekennzeichnet, dass** die elektrischen Energiespeichermittel zwei Batterien (120, 121) umfassen, wobei sich von mindestens einer ausgehend eine erste Leitung zur ständigen Versorgung (123, 124) erstreckt, und dass sich die zweite Leistungversorgungsleitung (125) ausgehend von einer dieser Batterien (120) erstreckt, und dass sich die dritte überwachte Versorgungsleitung (130) ausgehend von der anderen dieser Batterien (121) erstreckt.

10. Elektrisches Bordnetz nach Anspruch 8 oder 9, **dadurch gekennzeichnet, dass** Funktionsorgane (109, 110, 128, 129) an Bord des Fahrzeugs einen Abschnitt (11, 12) zum Überwachen von Funktionen umfassen, der an die dritte überwachte Versorgungsleitung (105) angeschlossen ist, und einen Leistungsabschnitt (114, 115), der an die zweite Leistungversorgungsleitung (103) angeschlossen ist.

## Claims

1. An electric system onboard a motor vehicle, of the type comprising electrical energy storage means (2; 102; 120, 121), an alternator, a starter, permanent supply functional members, power supply functional members and computers, comprising a first permanent supply line (1; 101; 123, 124) associated with the permanent supply members and connected directly to the electrical energy storage means (2; 102; 120, 121), a second power supply line (3; 103; 125) associated with the starter, with the alternator and with the power supply members and connected to the electrical energy storage means (2; 102; 120, 121) through a closure contactor (K2) on switching on the ignition of the vehicle, **characterized in that** it comprises a third supply line (5; 105; 130) switched during storage of the vehicle (5; 105; 130), associated with the computers and connected to the electrical energy storage means through switching means (K1) of their supply.

2. The electric system according to Claim 1, **characterized in that** the switching means (K1) include a contactor controlled for opening during a storage of the vehicle.

3. The electric system according to Claim 1, **characterized in that** the switching means (7) include connecting means of the third line (5) downstream of the closure contactor (K2) of the second power supply line, during a storage of the vehicle.

4. The electric system according to Claim 3, **characterized in that** the connecting means (7) include a switch.

5. The electric system according to Claim 4, **characterized in that** the switch is electrically actuated.

6. The electric system according to Claim 4, **characterized in that** the switch is manually actuated.

7. The electric system according to Claim 4, **characterized in that** the connecting means include shunt-forming means displaceable manually between a connecting position of the third line (5) downstream of the closure contacter (K2) of the second line (3) and a connecting position of the third line (5) directly to the storage means (2).

8. The electric system according to any one of the preceding claims, **characterized in that** the switching means include an opening contactor (K1), the functioning of which is controlled by monitoring means (107; 132) of the current circulating in this line.

9. The electric system according to Claim 8, **characterized in that** the electrical energy storage means comprise two batteries (120, 121), from at least one of which a first permanent supply line (123, 124) extends, **in that** the second power supply line (125) extends from one of these batteries (120) and **in that** the third monitored supply line (130) extends from the other of these batteries (121).

10. The electric system according to Claim 8 or 9, **characterized in that** functional members (109, 110; 128, 129) onboard the vehicle comprise a functions monitoring portion (11, 12) connected to the third monitored supply line (105) and a power portion (114, 115) connected to the second power supply line (103).
